# EUROPEAN PATENT SPECIFICATION

(11) **EP 3 657 535 B1**
(45) Date of publication and mention of the grant of the patent: **15.02.2023**
(21) Application number: 18382831.8
(22) Date of filing: 20.11.2018
(51) Int. Cl.: H01L 21/66, G01J 1/42, G01J 1/04, G01J 1/02, G01N 21/958, G01N 21/88

(54) **DEVICE FOR TESTING AN INTEGRATED CIRCUIT WITH OPTOELECTRONIC EMITTER, MANUFACTURING SYSTEM AND ASSOCIATED TESTING AND MANUFACTURING PROCESS**
VORRICHTUNG ZUR PRÜFUNG EINER INTEGRIERTEN SCHALTUNG MIT OPTOELEKTRONISCHEM EMITTER, HERSTELLUNGSANLAGE UND ZUGEHÖRIGES PRÜF- UND HERSTELLUNGSVERFAHREN
DISPOSITIF DE VÉRIFICATION D'UN CIRCUIT INTÉGRÉ COMPORTANT UN ÉMETTEUR OPTOÉLECTRONIQUE, INSTALLATION DE FABRICATION ET PROCÉDÉS DE VÉRIFICATION ET DE FABRICATION CORRESPONDANTS

(43) Date of publication of application: 27.05.2020
(73) Proprietor: Simulacions Optiques S.L., 08221 Terrassa (Barcelona) (ES); Universitat Politècnica De Catalunya, 08034 Barcelona (ES)
(72) Inventor: PIZARRO BONDIA, Carles, 08034 Barcelona (ES); SÁNCHEZ MARTÍNEZ, Jorge Julián, 08034 Barcelona (ES); BLANCO NIETO, Patricia, 08034 Barcelona (ES); CASTILLA GONZÁLEZ, Pau, 08221 Terrassa (ES); DOMÍNGUEZ ÁLVAREZ, Noemí, 08221 Terrassa (ES)
(74) Representative: Curell Suñol S.L.P.

(56) References cited:
- CN-A- 102 735 424
- JP-A- 2010 286 339
- KR-B1- 101 291 914
- KR-B1- 101 291 914
- US-A1- 2011 241 549
- US-A1- 2015 369 695

## Description

### Field of the invention

The invention relates to a device for checking an integrated circuit having an optoelectronic emitter suitable for emitting a beam of electromagnetic radiation and defining a beam emission axis. The invention also relates to a plant for manufacturing said integrated circuits and to processes for the checking and manufacture thereof.

### State of the art

Within the field of optics and, in particular, that of lenses, the checking and quality control systems in the manufacturing processes are basic and have been the object of great evolution throughout history. In general, the analysis of the manufactured lenses is divided into two large groups: mass produced lenses and the specifically manufactured lenses (or sets of lenses). Depending on which group, the quality controls are more or less exhaustive, although all of them have a common feature: these controls are always carried out in an environment and at a time isolated from the production process, whereby they cannot be considered as "on line".

In the case of personalized, high precision lenses or sets of lenses used in image forming systems, such as may be photographic lenses, the analysis is much stricter and costly, which reflects both on the market price of the product and on the automation of the process. These exhaustive analyses are mainly carried out by methods based on the focus, contrast and other features of the image produced by the lenses or set of lenses to be analyzed.

A particularly notable case of the image forming systems is the field of ophthalmic lenses, mass produced lenses for forming an image, but with a quality control much less strict than for other lenses. In this case, the most common thing is a random analysis of lenses normally through a process involving an observer, making it unstable and subjective. In some cases, an objective analysis is considered with some measuring device (normally based on interferometry principles) which is carried out on and validates a number of occasional measurements on selected lenses. Even so, this automatic occasional analysis does not exclude the human control relative to other qualities of the lenses. The control of these lenses is in this way due to the great optical power and versatility of the human eye, which is capable of compensating errors in the ophthalmic lenses intolerable in the case of more specialized image forming systems.

As far as optical components directed to the field of energy transmission are concerned, for example, the field of illumination, the quality of the obtained part is not so demanding relative to the surface geometry, since it is not a so critical variant when obtaining the particular functionality, a functionality which is not checked in present day systems.

The present invention is centred on the process for checking devices that act as encapsulated members of optoelectronic circuits. Optoelectronic circuits are those which contain members active in a particular frequency band and which interact with the exterior through windows in their encapsulation. Within these circuits there are, as the most representative, those containing light emitting diodes (LED). These devices, the applications for which are continuously on the increase, are comprised basically of a ceramic or metal plate where there are to be found the circuit connections, a die corresponding to said light emitting diode and which is usually manufactured by plating with material, the corresponding leads of gold or other metal which connect the plate to the die and the encapsulation of the component where we can find the encapsulation of the electrical circuit providing the component with protection, conductivity and heat sink properties and the encapsulation of the diode, an optical encapsulation providing the component with the adequate functionality. Up to now, the complete functionality of the LED, namely, which particular pattern of light emission the component produces, is achieved by the application of a spherical or parabolic lens over the diode (known as primary lens and manufactured by deposition of a drop of optical plastics) and a secondary lens, normally manufactured by injection of optical plastics in a different production system. This set of optics provide the component with the desired functionality. Nevertheless, it is possible to mold a number of layers of optical plastics materials over the optoelectronic circuit to provide the component with the desired functionality in the same production chain as the circuit encapsulation. The inclusion, by over-molding, of this optical component on the circuit, in a single production process, is extremely important for the reduction of associated costs and for the improvement of the component's properties, since the sources of error in the manufacture and positioning of the chips are reduced.

Even so, within the over-molding process, since a manufacturing process of a plastics optical component is being carried out, there are a number of associated errors which can affect the behavior of the system. These errors may be both in the material, by formation, for example, of air bubbles or a compacting of non-homogenous material, in the shape of the component, by incorrect copying of the geometry of the part in the molding process, or by the relative positioning between the circuit and the optics. The combination of all these sources of error may drastically affect the functionality of the component in question. This is why there is a need for a process for checking these variables.

There are some on-line checking methods for assembly of these components, such as, for example, the one described in US 2014/210982 A1 by Kewei Zuo et al., which discloses an automatic quality control method based on the automatic inspection of all the assembly steps, as well as of the end product obtained, in a feedback manner and by self-learning. Generally, the methods are focused on the evaluation of defects relating to the material and the mechanical characteristics, such as the surface of the part, but putting aside one important feature of the product, above all in the field of illumination where this invention is located: the functionality.

As far as the inspection of material is concerned, there are different variables to be taken into account and which affect the correct behavior of the device. On the one hand, the formation of bubbles in the molding process may cause a dispersion of the light which interacts negatively with the end purpose of the product. Also, the incorrect compacting of the molded material may cause an anisotropic distribution of the refractive index, creating area of birefringence, which is an indicator of internal stress of the part which may cause fracture once manufactured. In this sense, there are instruments for measuring these characteristics. In US 5,598,262 A, Jutard et al. offer a process for the inspection of transparent material by way of the uniform illumination of the material and the analysis by contrast of the obtained transparency. By this method it is possible to detect air bubbles in the material, as well as other defects, although the measurement of birefringence is not considered.

In the case of surface inspection, the measuring methodology is broad and well-studied, although all the methods are characterized by being carried out at a time and in a space removed from the production system. This is due to the characteristic measuring times of the surfaces, too long to be performed within the production line. Furthermore, these methods are used, above all in image forming systems, where the required manufacturing accuracy is in the range of tens of nanometers, whereas in the case of energy transmission components, such as illumination, the required tolerances are to be found in the range of tens and hundreds of microns, such that the analysis of the surfaces obtained in the molding process are not so important as the other basic components, the material and the functionality.

Nevertheless, the third of the qualities to be checked mentioned above, the functionality of the device, is not a feature where inventions or instruments are to be found, in spite of it being possibly the most important feature in the field of illumination. We can find in the state of the art inventions validating the quality of the radiation pattern of a point obtained by the reflection on a surface of a particular radiation beam such as shown by Peter Idit in WO 2016/009440 A1, where he measures the different characteristics of the luminous point reflected at large distances.

US 2015/369695 A1 describes a detecting system for detecting an under-test light of an under-test object includes a light spatial distribution unit, a chromatic-dispersion light-splitting unit and a detecting unit. The light spatial distribution unit is disposed on a side of the under-test object to receive the under-test light and form a plurality of point light sources. The chromatic-dispersion light-splitting unit is disposed on a side of the light spatial distribution unit to receive the point light sources and produce a light-splitting signal. The detecting unit is disposed on a side of the chromatic-dispersion light-splitting unit to receive the light-splitting signal and produce an optical field distribution of the under-test light.

KR 101291914 B1 describes an optical axis measuring method for a light emitting diode (LED) module is provided to measure an optical shaft of a luminous body including an LED and a lens, which are target object, by measuring the brightness of both sides of a central point on an image after photographing lights emitted from the luminous body with a diffuser. The method includes the following steps of: arranging the LED module at an inspection position (S110); applying power to an LED (S120); diffusing the lights of the LED, which are output through a lens, through a diffuser arranged on the front side of the LED module (S130); outputting an image by photographing a luminous body in which the lights are diffused (S140); determining an optical axis of the luminous body by obtaining an inflection point according to the brightness of the left and right sides of a central point on the image (S150); setting a measurement line on the image; measuring the brightness of the measurement line; displaying the measured brightness; and rotating the measurement line at a predetermined angle.

In JP 2010286339 A the problem to be solved is to provide an inspection means that can inspect the directivity of a light source at high speed by a simplified structure and be incorporated in a production line for LEDs or the like. The proposed solution consists in a
semi-transparent screen 4 that is placed between a light source 2 to be inspected and a camera 3, and the light source 2 is turned on to project both the light source image 2a and the projection light image 2b of the light source 2 on the semi-transparent screen 4. The light source image 2a and the projection light image 2b are picked up by the camera 3, and the picked-up image 8 is processed, thereby detecting any one of the distribution of distributed light, directional angle and direction angle as directivity characteristic by referring the difference of luminance level on the picked-up images 8.

Considering the existing state of the art, we can see that in the field of this invention, the over-molding of optoelectronic circuits with an encapsulation having optical functionality, the existing checking systems are insufficient, either because the control is performed in an environment totally different from that of the production line, because the majority of checking systems are for the analysis of lenses having two surfaces (which is not the case presented, since there is only one interface between the plastics material and the air), because they use methods of transmission of a determined wave front (impossible to perform in the case of optics embedded in the circuit) or because they do not check the end functionality of the component.

### Disclosure of the invention

It is an object of the invention to overcome these drawbacks and offer a process allowing a plurality of features to be checked automatically and efficiently. This purpose is achieved by a checking device as set out in the appended claims.

In fact, as will be commented upon in fuller detail hereinafter, the device of the invention allows the control of the manufactured lens to be performed on the production line itself, since it can be installed on the production line itself. Furthermore, it allows a lens embedded in a circuit to be checked, since it analyzes the light emitted (in general the electromagnetic radiation emitted) by the optoelectronic device and has no need to have access to a "front" surface of the lens nor any need for the lens to be illuminated with a particular wave front, but the light emitted by the optoelectronic device is analyzed directly. It also affords the advantage that the end functionality of the integrated circuit is analyzed directly. On the other hand, the device allows it to be totally automated.

The checking device of the invention may be used very flexibly. Thus, it may be used only in the start-up stage of the production process, such as to allow the adjustment of the production parameters up to when the manufacturing plant is ready to start the mass production. It is also possible to use the checking device during the mass production, such that at particular times, it may be checked whether the mass production is still maintaining the initially established optimum production parameters or whether it is necessary to introduce corrections in any of the production parameters. Finally, it is possible to use the checking device to control the whole production. Therefore, it is also an object of the present invention:
A - a checking process as set out in the appended set of claims.
B - a manufacturing plant for an integrated circuit having an optoelectronic emitter suitable for emitting a beam of electromagnetic radiation and defining an axis of emission of the beam as set out in the appended set of claims.
C - a manufacturing process for an integrated circuit having an optoelectronic emitter suitable for emitting a beam of electromagnetic radiation and defining an axis of emission of the beam as set out in the appended set of claims.
C1- the manufacturing process preferably includes a checking step including the checking process of the invention on the optoelectronic emitter prior to the step of deposition.
C2 -in an advantageous alternative the manufacturing process comprises a start-up step including the checking process and a mass production step not including the checking process.
C3 - it is likewise advantageous that in the manufacturing process the integrated circuit is transported from a deposition station where the deposition step is performed to a checking station where the checking step is performed by automated transportation means,

Preferably the checking device comprises positioning means appropriate for positioning said optoelectronic emitter such that said axis of emission coincides with said optical axis. Thus, the positioning means can take an integrated circuit from the manufacturing line, position it appropriately for performing the checking process and, as the case may be, return it to the production line after the checking process.

The reflecting means are a parabolic reflector. The parabolic reflector preferably has an aperture diameter of ranging from 20 to 80 mm, most preferably ranging from 47 to 53 mm. Advantageously, the ratio of the aperture diameter to the distance between the aperture and the focal point of said reflector ranges from 0.5 to 1.5.

Preferably the reflecting means (and, in particular, the parabolic reflector) have an angle of aperture greater than 20°, preferably greater than 25°. Additionally, it is advantageous for them to have an angle of aperture smaller than 45°.

Preferably the convergent lens has a focal length ranging from 20 to 100 mm, most preferably ranging from 37 to 43 mm. The convergent lens advantageously has an outer diameter equal to the aperture diameter of the reflecting means.

Preferably the checking device is suitable for being disposed on the optoelectronic emitter such that the distance between the convergent lens and the optoelectronic emitter is equal to the focal length of the convergent lens.

Advantageously the holes in the opaque sheet have such a size that the diffraction suffered by said beam may be ignored. Thus, preferably, the holes have a diameter ranging from 0.25 to 2 mm. most preferably from 0.9 to 1.1 mm. The holes are advantageously spaced apart from one another at a distance ranging from 1 to 3 mm, preferably from 1.8 to 2.2 mm.

Preferably the measuring module comprises a CCD sensor. The measuring module is advantageously disposed at a distance from said convergent lens equal to the focal length of said convergent lens.

In the alternative [a] of claim 1, it is advantageous for the second convergent lens to have a focal length ranging from 10 to 50 mm, preferably ranging from 18 to 22 mm. It is also advantageous that the second measuring module should comprise a CCD sensor and/or that the second measuring module be disposed at a distance from the second convergent lens equal to the focal length of the second convergent lens.

Preferably, in the checking process of the invention, there is a step of connecting said optoelectronic emitter to a source of electrical energy, prior to the evaluation. It is likewise advantageous that prior to the evaluation there is a step of positioning reflecting means around the optoelectronic emitter. On the other hand, the evaluation advantageously comprises the comparison of the real image of each of the holes obtained in the measuring module or the second measuring module with a pre-set image. This comparison preferably includes both the comparison of the position of the real image of each of the holes of the sheet relative to some pre-set positions, and the comparison of the intensity of real radiation received in the image of each of the holes of the sheet relative to some pre-set intensities.

### Brief description of the drawings

Further advantages and features of the invention will become apparent from the following description, in which, without any limiting character, preferred embodiments of the invention are disclosed, with reference to the accompanying drawings in which:
Fig. 1 is a tree of decisions describing the setting-up process of the production line.
Figs. 2 and 3 are a schematic representation and a graph with the variables describing the functionality of a light emitting optoelectronic circuit.
Figs. 4 and 5 are the schematic representation and graph of Figs. 2 and 3 applied to an example of asymmetrical distribution of intensity of a light emitting optoelectronic device.
Fig. 6 is a schematic representation of a machine allowing the application of the invention.
Fig. 7 is a schematic representation of an optoelectronic circuit having a light emitting diode.
Fig. 8 is the product obtained by optical encapsulation of the optoelectronic circuit of Fig. 7.
Fig. 9 is a schematic representation of the checking process performed for the start-up of the manufacture of the component described in Fig. 8.
Fig. 10 is a side view of a light emitting optoelectronic circuit with a parabolic reflector.
Fig. 11 is a schematic representation of a possible assembly for determining the functionality of an optoelectronic circuit.
Fig. 12 is a simulation of the image obtained by a sensor of the assembly of Fig. 11.
Fig. 13 is a simulation of the intensity signal obtained by the sensor of Fig. 11 in the example of Fig. 12,
Fig. 14 is a comparison between the simulated signal and the signal measured in the sensor of the assembly of Fig. 11.
Fig. 15 is a comparison between the simulated intensity signal and that obtained in the sensor of Fig. 11 in the example of Fig. 12.
Fig. 16 is a schematic representation of another possible assembly for determining the functionality of an optoelectronic circuit.

### Detailed description of embodiments of the invention

The present invention is based on the step by step checking of the manufacturing process of the components obtained during the start-up of the industrial process, validating the manufacturing process and the obtained component. To this end, it is necessary to check all the steps constituting the overmolding process, from the correct injection of the material by checking that no bubbles or anisotropic compactation are generated, which give rise to internal stress processes and which may end in breakage of the part, up to checking the final functionality of the component. The measurement and control of these characteristics of the product obtained during the start-up of the production system allow the set-up of the process by modifying the appropriate molding parameters. Nevertheless, the set-up of the of the production process has some very high-speed requirements, whereby there is a need for a rapid checking system integrated in the production line itself.

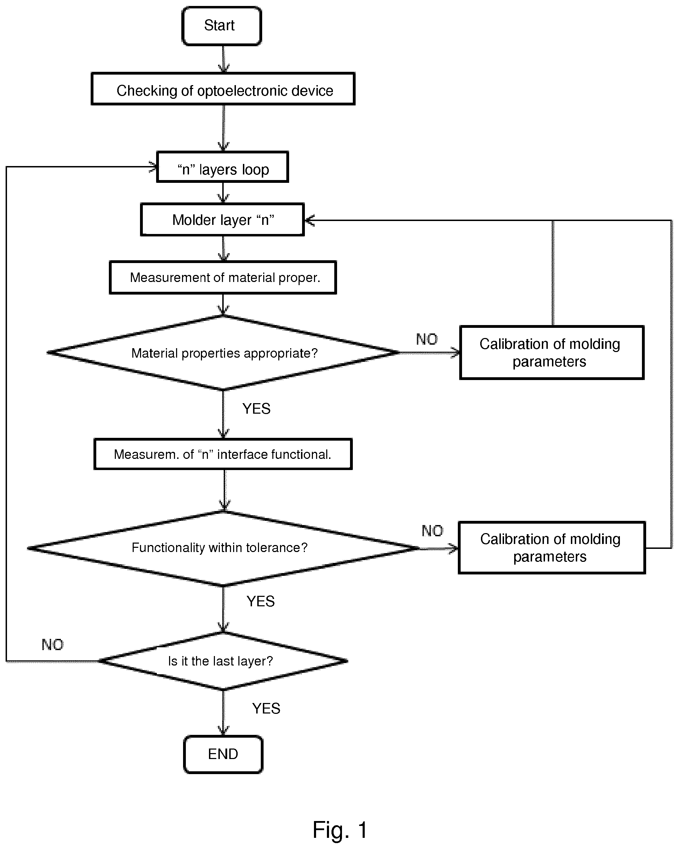

The present invention presents a method of automatic inspection for the encapsulation components of optoelectronic circuits obtained by molding of plastics. In the invention the checking process of the component is considered for the set-up of the production system. To this end, a set-up process is performed in which the different steps of molding the components are sequentially analyzed with a view to providing feedback for the molding process. Fig. 1 shows a schematic representation of the checking process for the molding of an indeterminate number of layers on a device having a particular functionality. Depending on the measurements obtained the molding parameters of these plastics layers are subjected to modification to have an adjustment of the process. This continuous adjustment process has to be performed in an environment replicating the component manufacturing conditions, whereby, considering the machines to be used (generally injectors or other molding machines having specific working conditions as far as temperature, pressure etc. are concerned, there is a need for systems allowing for a speedy measurement of the component's characteristics to be able to act as soon as possible and reduce the cost of the adjustment process to as low as possible. Thus, the proposed checking process uses novel measuring systems which provide the necessary basic information in the shortest possible time and which are easily installable in the manufacturing line.

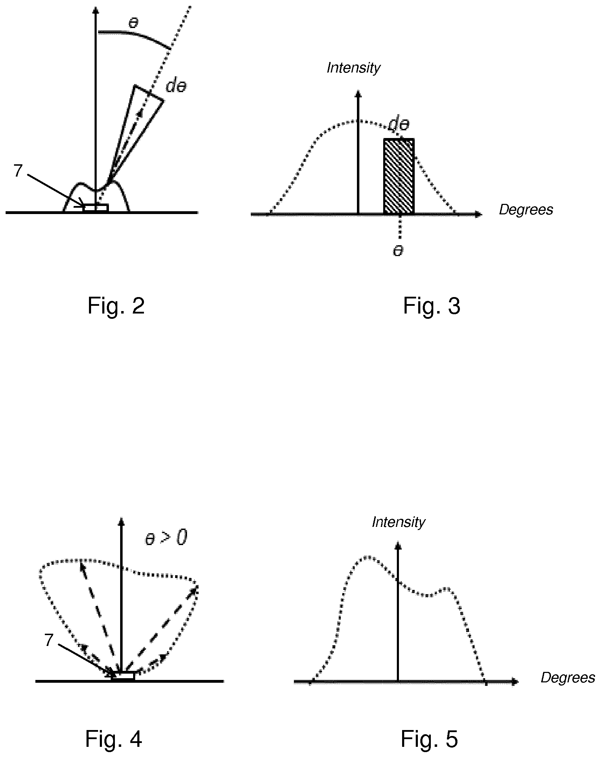

The quality of the molding of the lens is based on the measurement and detection of possible defects such as non-homogenous bubbles or distribution of material. As far as the functionality of a light emitting device is concerned, this is described in the directionality of the light emitted and the amount of light emitted in each direction. Commonly, to describe these variables, emission graphs are used where on the X-axis there are shown the degrees of light emission and on the Y-axis the emitted intensity (usually standardized. Fig. 2 shows a schematic representation of an optoelectronic circuit having embedded optics and the ray emitted at an angle θ. In Fig. 3 there is shown a corresponding graph in which the energy emitted around this angle, with standardized energy values, is shown on the Y-axis, as function of the degree θ. Fig. 4 shows an example of optical functionality of an emitter circuit. In this case, it can be seen that the emission lobe is not symmetrical relative to the emission angle θ=0 and that there is a greater amount of energy emitted in the negative angle values than in the positive ones, such as shown in the graph of Fig. 5. Thus, the functionality of the optoelectronic device is determined by measuring the amount of energy emitted for each angle of emission.

The process is initiated with a check of the behavior of the optoelectronic circuit to be encapsulated. Subsequently, all the molded layers that are going to be molded are analyzed independently in loop.

For the analysis of each molded layer, there are analyzed in the same measuring process the quality of the molded material, as well as the functionality of that molded layer. As far as the quality of the material is concerned, the detection of impurities, such as the bubbles and the evaluation of the birefringence is a key point and is performed by one of the measuring methods based on polariscopes, from the many described in the literature. The acquisition system is provided with image recognition software capable of detecting these defects and objectively evaluating the suitability of the molded material. Although the quality of the molded material depends on many factors, these processes of creation of defects in the material are very closely related to the melting point of the material and the properties thereof on flowing, whereby, among other characteristics, the control and adjustment of the temperature cycles of the molding process is very important for readjusting the behavior of the machine iteratively until the validation is achieved.

Concerning the evaluation of the functionality of the component formed by the optoelectronic circuit and the corresponding molded layer in which it is found, the process is performed by a completely novel system with which the direction of the light emitted by the circuit and the amount of light emitted in each direction is evaluated and compared with the functionality expected from the design, being validated according to whether the result of the measured functionality is within the corresponding tolerance.

This set-up process will depend on the end application of the optoelectronic device and the number of molded layers required for this application. Furthermore, the set-up process is taken into consideration both right at the start of the installation of the process and in subsequent readjustments thereof, since the behavior thereof may vary with the passage of time and the wear and tear of the parts of the system.

The checking system of the process takes into consideration the option of molding various layers of plastics material by different molding technologies (injection, ultrasonic, extrusion, etc.) such that it acts sequentially on each of the layers to be molded.

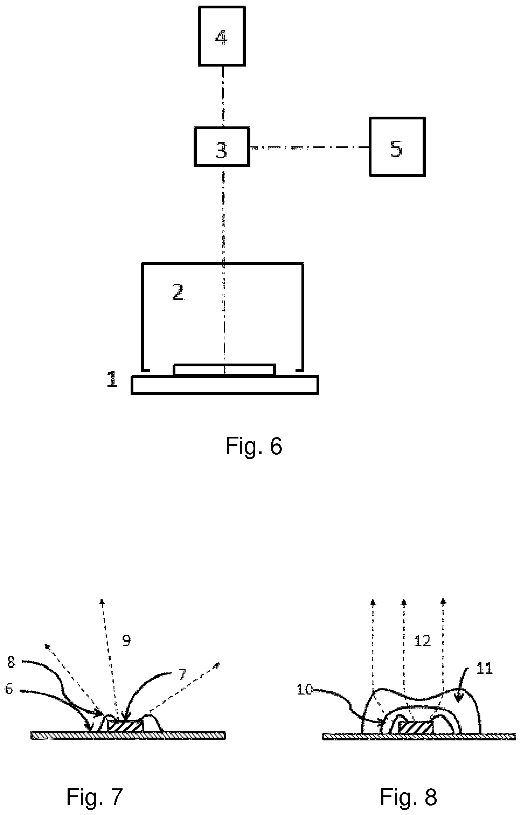

The invention also protects the instrument appropriate for performing the required measurements of the process of checking the functionality. One embodiment of this instrument, shown schematically in Fig. 6, consists of a machine having a twin arm optical system. Particularly, although without being limited to modifications in the applied technologies which do not alter the functionality of the instrument, the instrument is comprised of:
- positioning means 1 automated in the production line housing the optoelectronic circuit and the molded layer,
- a system 2 allowing the disposal of different optical and mechanical members on the optoelectronic circuit,
- beam splitting means 3 allowing the light emitted by the optoelectronic member to be split according to the axis of emission, which allows the application of two optical systems with two measuring modules 4 and 5 independent from one another.

Figs. 7 and 8 show the case of an encapsulation of two layers of plastics on an optoelectronic circuit containing a light emitting diode LED. The objective is to overmold the circuit with two layers of transparent plastics material which modify the original emission profile of the LED to a collimated beam emission profile. In the initial state of the process, a start is made by obtaining an external component (namely, coming from a manufacturing method foreign to the field of the invention) such as that of Fig. 7 formed by the appropriate optoelectronic circuit containing a substrate 6, a light emitting diode 7 and connections 8 between these two components. This emitting diode emits rays 9 in all directions with a Lambertian emission pattern. The purpose of the manufacturing process is to encapsulate this circuit by way of two molded layers of transparent plastics and conforming a collimation if the emitted rays. In Fig. 8 there is to be seen the component on which there has been overmolded a first 10 and a second 11 layers of plastics, obtaining a collimated beam of rays 12 in one same direction.

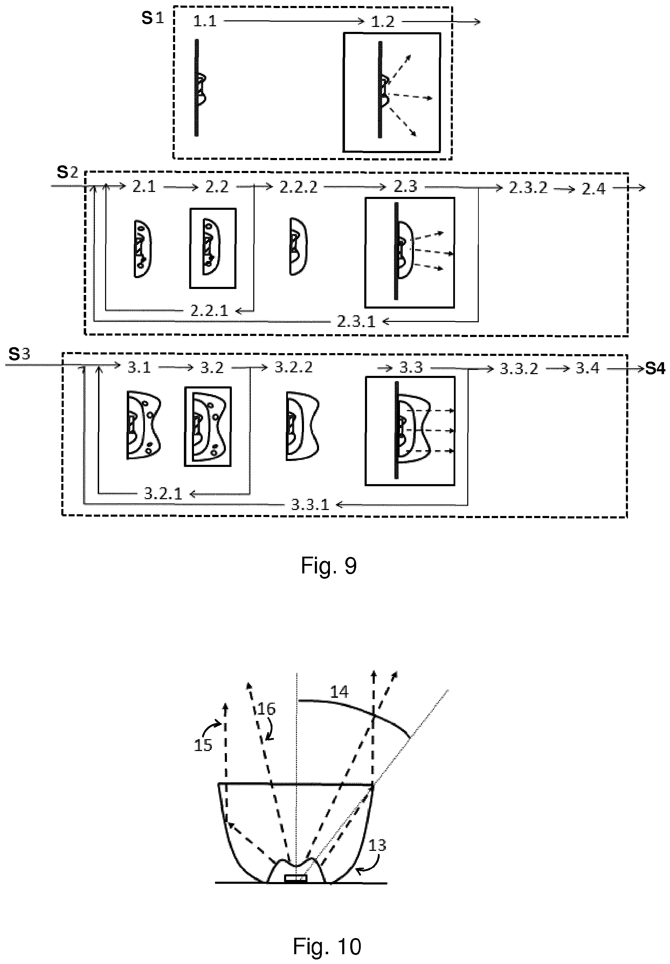

To perform the checking process of this device, the layout of Fig. 1 is followed, bearing in mind that the number of layers to be molded is two. Thus, the manufacturing adjustment process, schematically shown in Fig. 9, is as follows:
S1 Initial circuit analysis;
1.1. Receipt of the optoelectronic circuit having the LED.
1.2 Measurement of the emission pattern of the LED. this step is important since the design of the geometrical forms of the optical components depends a lot on the source of emission and it must be checked that the real emission pattern is the same as the one used when carrying out the optical design of the component.
S2 Analysis of the first molded layer.
2.1. Overmolding of the first geometrical form on the corresponding optoelectronic circuit.
2.2. Measurement of the properties of the molded material.
2.2.1. If necessary, readjustment of the molding conditions and return to point 2.1 of the process.
2.2.2. If the properties of the material are correct, move on to step 2.3.
2.3. Measurement of the functionality of the obtained ensemble.
2.3.1. If necessary, readjustment of the molding conditions and return to point 2.1 of the process.
2.3.2. If the properties of the material are correct, move on to point 2.4
2.4. The molding parameters obtained are established as the appropriate ones for this first layer of the component.
S3 Analysis of the second molded layer.
3.1. Overmolding of the second geometrical form on the corresponding optoelectronic circuit and first molded layer.
3.2. Measurement of the properties of the molded material.
3.2.1. If necessary, readjustment of the molding conditions and return to point 3.1 of the process.
3.2.2. If the properties of the material are correct, move on to point 3.3.
3.3. Measurement of the functionality of the obtained ensemble.
3.3.1. If necessary, readjustment of the molding conditions and return to point 3.1 of the process.
3.3.2. If the properties of the material are correct, move on to point 3.4
3.4. The molding parameters obtained are established as the appropriate ones for this second component.
S4 End of the adjustment process.

Within the checking process the quality parameters governing the acceptance of the parts at the different points are taken into account. These parameters will depend on the end application to which the component is destined.

As far as the measurement of the functionality of the molded layer is concerned, they are performed, for example, with the following process and assembly.

In Fig. 10 there is considered the initial optoelectronic circuit with emission of light in all directions. By placing a parabolic reflector 13 on the sides (which is part of the aforementioned system 2), it is achieved that the light emitted up to a certain angle 14 (angle of aperture of the parabolic reflector 13) determined by the dimensions of the reflector 13 and with a preferred value of 60 degrees relative to the horizontal plane, is reflected in a vertical direction (reflected rays 15), while the remaining light exits with the original direction of emission (unreflected rays 16), preferably in a cone of light of ± 30 degrees relative to the axis of emission (which, in Fig. 10, is vertical). Thus, there is achieved a modification of the direction of the rays emitted at the angles greater than the angle of aperture 14 and the concentration thereof within the optical system which will be used.

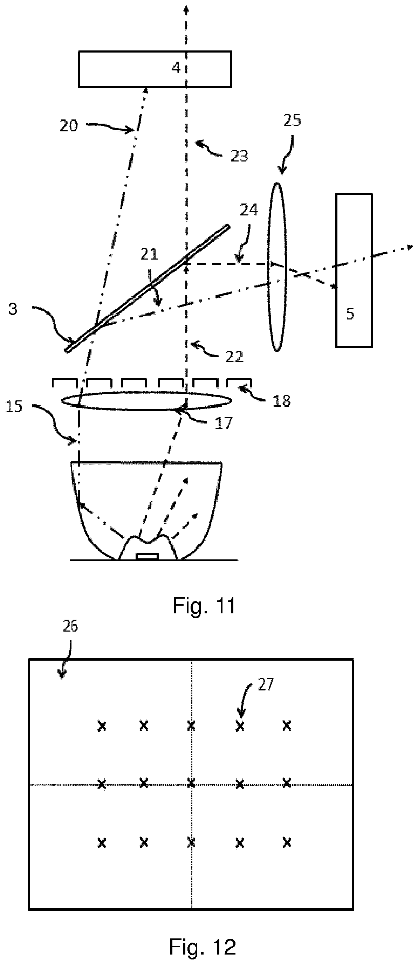

Fig. 11 shows, in a side view of an example of the measuring equipment, the behavior of the system. The light emitted by the emitting diode 7 and that reflected by the parabolic reflector 13 is directed to an optical system having a convergent lens 17 and an opaque sheet 18 having a pattern of apertures (which are part also of the aforementioned system 2) and beam splitting means 3. The parabolic reflector 13 used has a symmetry of revolution and an aperture having a preferred dimension of 50 mm diameter.

The convergent lens 17, having preferably a focal length of 40 mm and a diameter of 50 mm, in agreement with the aperture of the reflector 13, focuses the light coming in a vertical direction (the reflected rays 15) to a particular focal point. This light passes through the 1 mm diameter holes of the sheet 18 (they must not be very small to avoid diffractive patterns) preferably disposed in a square matrix spaced apart by 2 mm (for optimization of the contrast), which is behind the lens 17. The light emerging from the sheet enters the beam splitting means 3, with one half of the energy of the rays following the straight trajectory (convergent transmitted rays 20) towards a measuring module 4 and the other half being diverted in the perpendicular direction (convergent diverted rays 21) towards a measuring module 5. On the other hand, the convergent lens 17 is placed at the focal length of the optoelectronic circuit emitting the energy, whereby the light in the ± 30 degrees range relative to the vertical plane is refracted on crossing through the lens 17, being collimated in a vertical parallel direction (according to the optical axis of the convergent lens 17, which is vertical relative to what is shown in Fig. 11. although the whole device can have any orientation in the space). They are the parallel rays 22. This light is subjected to the same effect as the previous light on crossing through the beam splitting means 3: one half of the light is transmitted (parallel transmitted rays 23) towards the measuring module 4 and the other half (parallel diverted rays 24) is reflected towards the measuring module 5.

The measuring device 4, comprising a CCD sensor, has been placed at the focal length of the convergent lens 17, such that the light coming from the range of emission with angles greater than 30 degrees relative to the vertical plane (the convergent transmitted rays 20) are focused in the CCD sensor obtaining an image of the aperture pattern of the sheet 18, while the light coming parallel (the parallel transmitted rays 23) is not focused on the CCD sensor. Thus, an image of the rays emitted by the circuit in the range of angles greater than 30 degrees relative to the vertical plane (namely, the axis of emission) is collected in the sensor of the measuring module 4.

The measuring module 5 is comprised of a second convergent lens 25 having a short focal length, preferably 20 mm, and an image capturing CCD sensor placed in the focal plane of this second convergent lens 25. Thus, the light coming collimated from the beam splitting means 3 (the parallel diverted rays 24) will be focused, projected and registered in the CCD sensor, while the light coming converging from the convergent lens 17 (the convergent diverted rays 21) will not be focused on this CCD sensor. Thus, only the rays emitted by the circuit in the range of angles smaller than 30 degrees relative to the vertical plane will be collected in the measuring module 5.

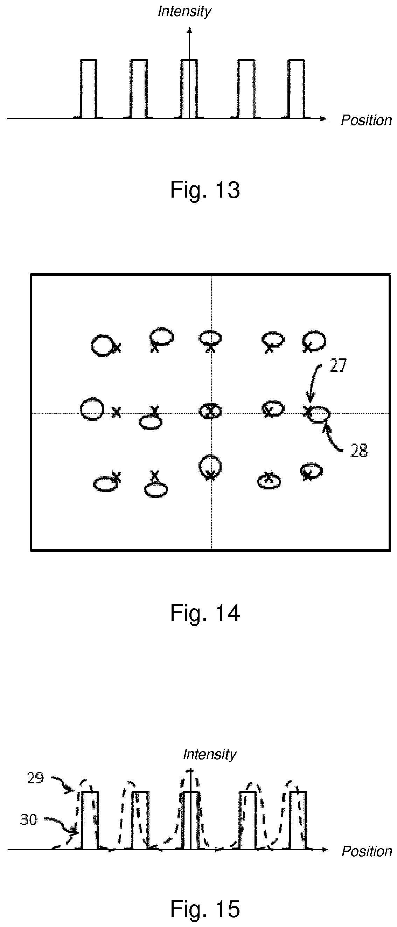

This assembly allows us to register in a single measuring process the light emitted by thee circuit in both small and great angles of emission. The details of the quality of the material and the functionality may be obtained from these data as follows:
- bearing in mind the emission pattern expected by the initial circuit, the surfaces molded on the circuit (considering according to the point of the process at which we are one molded layer, various, or all) and the optical components used in the assembly, simulations of the expected measurement may be made both for the measuring module 4 and for the measuring module 5. The theoretical measuring point to be registered has a position in the sensor determined by the location of the aperture of the sheet through which the light passes, whereby if we consider a rectangular matrix of aperture in the sheet 18, the image expected in the CCD sensors is an approximately rectangular matrix. Fig. 12 shows a scheme of the image expected in a CCD sensor 26 where each of the crosses 27 marks the expected position of each ray. Each of these points in the simulated system must have an intensity like that schematically shown in Fig. 13, the height and width of which will depend on the position and the amount of energy expected. The location of this signal on the CCD sensor therefore marks the directionality of the analyzed ray as well as the energy flow transmitted, this being the area under the simulated curve of Fig. 13.

In the case of a real measurement, the light may undergo variation both in the expected position and in the shape of the signal detected by the CCD sensor. In Fig. 14 there is shown by means of circles a schematic representation of the obtained measurement 28 compared with the measurement simulated by the crosses 27. The variation in the position implies a variation in the directionality of the ray which implies a variation in the expected functionality of the device which may come from an irregular surface or a centring error between the lens and the optics. On the other hand, the variation in the shape of the measurement provides information on the amount of energy transmitted. Fig. 15 shows a schematic representation of the difference between the reading of a measurement 29 (line of dashes) and the simulated measurement 30 (continuous line). The set of the two variables of position and area under the curve allows us to validate the functionality of the device.

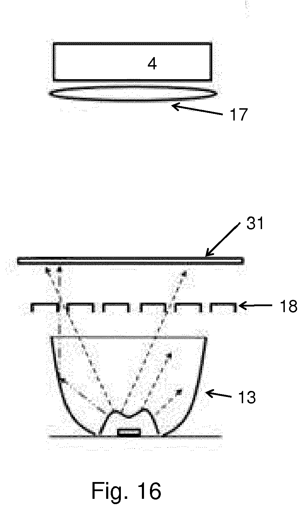

In Fig. 16 there is shown another embodiment of a checking device of the invention. In this case the device has a parabolic reflector 13, an opaque sheet 18 with holes, a convergent lens 17 and a measuring module 4. In this embodiment, the sheet 18 is disposed between the optoelectronic emitter (the diode 7) and the convergent lens 17. The checking device also includes a diffuser plate 31, disposed between the sheet 18 and the convergent lens 17. The measuring module 4 captures the image formed in the diffuser plate 31, from which the functionality of the device may be determined.

## Claims

1. - A device for checking an integrated circuit having an optoelectronic emitter suitable for emitting a beam of electromagnetic radiation and defining an axis of emission of said beam, the device comprising:
- electrical connecting means for connecting said optoelectronic emitter to a source of electrical energy,
- reflecting means (13) suitable for being positioned around said optoelectronic emitter in such a way that they reflect part of said beam, said reflecting means (13) being a parabolic reflector,
- a convergent lens (17) the optical axis of which coincides with said axis of emission, receiving electromagnetic radiation emitted by said optoelectronic emitter and that reflected by said reflecting means (13),
- an opaque sheet (18) having a plurality of holes, receiving electromagnetic radiation emitted by said optoelectronic emitter and that reflected by said reflecting means (13), and
- a measuring module (4) arranged for receiving the electromagnetic radiation coming from the convergent lens (17),
wherein
[a] said convergent lens (17) is disposed between said optoelectronic emitter and said sheet (18), and said device comprises additionally:
- beam splitting means (3), disposed between said sheet (18) and said measuring module (4) and suitable for splitting the electromagnetic radiation coming from said convergent lens (17) into a first beam (20, 23) propagating in a first direction and a second beam (21, 24) propagating in a second direction, where said first beam is directed towards said measuring module (4),
- a second convergent lens (25) the optical axis of which coincides with said second direction, and
- a second measuring module (5) suitable for receiving the electromagnetic radiation coming from said second convergent lens (25),
or wherein
[b] said sheet (18) is disposed between said optoelectronic emitter and said convergent lens (17), and said device comprises, additionally, a difusser plate (31) disposed between said sheet (18) and said convergent lens (17).

2. - A device according to claim 1, **characterized in that** said parabolic reflector has an aperture diameter ranging from 20 to 80 mm, preferably ranging from 47 to 53 mm.

3. - A device according to claim 2, **characterized in that** the ratio of the aperture diameter to the distance between the aperture and the focal point of said reflector ranges from 0.5 to 1.5.

4. - A device according to any one of claims 1 to 3, **characterized in that** said reflecting means (13) have an angle of aperture greater than 20°, preferably greater than 25°.

5. - A device according to any one of claims 1 to 4, **characterized in that** said reflecting means (13) have an angle of aperture smaller than 45°.

6. - A device according to any one of claims 1 to 5, **characterized in that** said convergent lens (17) has a focal length ranging from 20 to 100 mm, preferably ranging from 37 to 43 mm.

7. - A device according to any one of claims 1 to 6, **characterized in that** said holes have a diameter ranging from 0.25 to 2 mm, preferably from 0.9 to 1.1 mm.

8. - A device according to any one of claims 1 to 7, **characterized in that** said holes are spaced apart from one another at a distance ranging from 1 to 3 mm, preferably from 1.8 to 2.2 mm.

9. - A device according to any one of claims 1 to 8, wherein, in said alternative [a], said second convergent lens (25) has a focal length ranging from 10 to 50 mm, preferably ranging from 18 to 22 mm.

10. - A plant for the manufacture of an integrated circuit having an optoelectronic emitter suitable for emitting a beam of electromagnetic radiation and defining an axis of emission of said beam, **characterized in that** it comprises a checking device according to any one of claims 1 to 9.

11. - A process for checking an integrated circuit having an optoelectronic emitter suitable for emitting a beam of electromagnetic radiation and defining an axis of emission of said beam, **characterized in that** there is performed an evaluation of some real values indicative of the amount of electromagnetic radiation emitted by said optoelectronic emitter depending on the direction and it is compared with some ranges of pre-set reference values, and **in that** said evaluation is performed with a device according to any one of claims 1 to 9.

12. - A process according to claim 11, **characterized in that** said evaluation comprises the comparison of the real image of each of said holes obtained in the measuring module or the second measuring module with a pre-set image where, preferably, said comparison includes both the comparison of the position of the real image of each of said holes of the sheet relative to some pre-set positions, and the comparison of the intensity of real radiation received in the image of each of the holes of said sheet relative to some pre-set intensities.

13. - A process for manufacturing an integrated circuit having an optoelectronic emitter suitable for emitting a beam of electromagnetic radiation and defining an axis of emission of said beam, **characterized in that** it comprises a checking process according to any one of claims 11 or 12.

14. - A process according to claim 13, **characterized in that** it comprises:
- a step of depositing a layer of polymeric material on said optoelectronic emitter.
- a checking step including said checking process, and
- if said real values are outside said ranges of pre-set values, a step of adjusting at least one manufacturing parameter.

## Patentansprüche

1. Vorrichtung zur Prüfung einer integrierten Schaltung mit einem optoelektronischen Emitter, der geeignet ist, einen Strahl von elektromagnetischer Strahlung zu emittieren und eine Emissionsachse des Strahls zu definieren, wobei die Vorrichtung Folgendes umfasst:
- ein elektrisches Verbindungsmittel zum Verbinden des optoelektronischen Emitters mit einer Quelle von elektrischer Energie,
- ein Reflexionsmittel (13), das geeignet ist, derart um den optoelektronischen Emitter herum positioniert zu werden, dass es einen Teil des Strahls reflektiert, wobei das Reflexionsmittel (13) ein parabolischer Reflektor ist,
- eine Sammellinse (17), deren optische Achse mit der Emissionsachse zusammenfällt und die die von dem optoelektronischen Emitter emittierte und die von dem Reflexionsmittel (13) reflektierte elektromagnetische Strahlung empfängt,
- eine lichtundurchlässige Platte (18) mit einer Vielzahl von Löchern, die die von dem optoelektronischen Emitter emittierte und die von dem Reflexionsmittel (13) reflektierte elektromagnetische Strahlung empfängt, und
- ein Messmodul (4), das ausgebildet ist, die von der Sammellinse (17) kommende elektromagnetische Strahlung zu empfangen,
wobei
[a] die Sammellinse (17) zwischen dem optoelektronischen Emitter und der Platte (18) angeordnet ist, und wobei die Vorrichtung ferner umfasst:
- ein Strahlteilungsmittel (3), das zwischen der Platte (18) und dem Messmodul (4) angeordnet und geeignet ist, die von der Sammellinse (17) kommende elektromagnetische Strahlung in einen ersten Strahl (20, 23), der in einer ersten Richtung verläuft, und einen zweiten Strahl (21, 24), der in einer zweiten Richtung verläuft, zu teilen, wobei der erste Strahl zu dem Messmodul (4) hin gerichtet ist,
- eine zweite Sammellinse (25), deren optische Achse mit der zweiten Richtung zusammenfällt, und
- ein zweites Messmodul (5), das geeignet ist, die von der zweiten Sammellinse (25) kommende elektromagnetische Strahlung zu empfangen,
oder wobei
[b] die Platte (18) zwischen dem optoelektronischen Emitter und der Sammellinse (17) angeordnet ist, und wobei die Vorrichtung ferner eine Streuscheibe (31) umfasst, die zwischen der Platte (18) und der Sammellinse (17) angeordnet ist.

2. Vorrichtung nach Anspruch 1, **dadurch gekennzeichnet, dass** der parabolische Reflektor einen Aperturdurchmesser im Bereich von 20 bis 80 mm aufweist, vorzugsweise im Bereich von 47 bis 53 mm.

3. Vorrichtung nach Anspruch 2, **dadurch gekennzeichnet, dass** das Verhältnis von Aperturdurchmesser zum Abstand zwischen der Apertur und dem Brennpunkt des Reflektors im Bereich von 0,5 bis 1,5 liegt.

4. Vorrichtung nach einem der Ansprüche 1 bis 3, **dadurch gekennzeichnet, dass** das Reflexionsmittel (13) einen Aperturwinkel größer als 20°, vorzugsweise größer als 25° aufweist.

5. Vorrichtung nach einem der Ansprüche 1 bis 4, **dadurch gekennzeichnet, dass** das Reflexionsmittel (13) einen Aperturwinkel kleiner als 45° aufweist.

6. Vorrichtung nach einem der Ansprüche 1 bis 5, **dadurch gekennzeichnet, dass** die Sammellinse (17) eine Brennweite im Bereich von 20 bis 100 mm, vorzugsweise im Bereich von 37 bis 43 mm aufweist.

7. Vorrichtung nach einem der Ansprüche 1 bis 6, **dadurch gekennzeichnet, dass** die Löcher einen Durchmesser im Bereich von 0,25 bis 2 mm, vorzugsweise von 0,9 bis 1,1 mm aufweisen.

8. Vorrichtung nach einem der Ansprüche 1 bis 7, **dadurch gekennzeichnet, dass** die Löcher in einem Abstand im Bereich von 1 bis 3 mm, vorzugsweise von 1,8 bis 2,2 mm voneinander beabstandet sind.

9. Vorrichtung nach einem der Ansprüche 1 bis 8, wobei in der Alternative [a] die zweite Sammellinse (25) eine Brennweite im Bereich von 10 bis 50 mm, vorzugsweise im Bereich von 18 bis 22 mm aufweist.

10. Anlage für die Herstellung einer integrierten Schaltung mit einem optoelektronischen Emitter, der geeignet ist, einen Strahl von elektromagnetischer Strahlung zu emittieren und eine Emissionsachse des Strahls zu definieren, **dadurch gekennzeichnet, dass** sie eine Prüfvorrichtung nach einem der Ansprüche 1 bis 9 umfasst.

11. Verfahren zur Prüfung einer integrierten Schaltung mit einem optoelektronischen Emitter, der geeignet ist, einen Strahl von elektromagnetischer Strahlung zu emittieren und eine Emissionsachse des Strahls zu definieren, **dadurch gekennzeichnet, dass** eine Auswertung von einigen Istwerten durchgeführt wird, die die Intensität der von dem optoelektronischen Emitter emittierten elektromagnetischen Strahlung in Abhängigkeit von der Richtung angeben, und die mit einigen Bereichen von vordefinierten Referenzwerten verglichen wird, und dass die Auswertung mit einer Vorrichtung nach einem der Ansprüche 1 bis 9 durchgeführt wird.

12. Verfahren nach Anspruch 11, **dadurch gekennzeichnet, dass** die Auswertung den Vergleich des in dem Messmodul oder dem zweiten Messmodul erhaltenen realen Bilds von jedem der Löcher mit einem vordefinierten Bild umfasst, wobei vorzugsweise der Vergleich sowohl den Vergleich der Position des realen Bilds von jedem der Löcher in der Platte relativ zu einigen vordefinierten Positionen als auch den Vergleich der in dem Bild von jedem der Löcher in der Platte empfangenen Intensität der realen Strahlung relativ zu einigen vordefinierten Intensitäten umfasst.

13. Verfahren zum Herstellen einer integrierten Schaltung mit einem optoelektronischen Emitter, der geeignet ist, einen Strahl von elektromagnetischer Strahlung zu emittieren und eine Emissionsachse des Strahls zu definieren, **dadurch gekennzeichnet, dass** es ein Prüfverfahren nach einem der Ansprüche 11 oder 12 umfasst.

14. Verfahren nach Anspruch 13, **dadurch gekennzeichnet, dass** es Folgendes umfasst:
- einen Schritt der Ablagerung einer Schicht von polymerem Material auf dem optoelektronischen Emitter,
- einen Prüfschritt, der das Prüfverfahren enthält, und
- falls die Istwerte außerhalb der Bereiche der vordefinierten Werte liegen, einen Schritt des Anpassens wenigstens eines Herstellungsparameters.

## Revendications

1. Dispositif pour contrôler un circuit intégré présentant un émetteur optoélectronique approprié pour émettre un faisceau de rayonnement électromagnétique et définissant un axe d'émission dudit faisceau, le dispositif comprenant :
- des moyens de connexion électrique pour connecter ledit émetteur optoélectronique à une source d'énergie électrique,
- des moyens réfléchissants (13) aptes à être positionnés autour dudit émetteur optoélectronique de telle sorte qu'ils réfléchissent une partie dudit faisceau, lesdits moyens réfléchissants (13) étant un réflecteur parabolique,
- une lentille convergente (17) dont l'axe optique coïncide avec ledit axe d'émission, recevant un rayonnement électromagnétique émis par ledit émetteur optoélectronique et celui réfléchi par lesdits moyens réfléchissants (13),
- une feuille opaque (18) présentant une pluralité de trous, recevant un rayonnement électromagnétique émis par ledit émetteur optoélectronique et celui réfléchi par lesdits moyens réfléchissants (13), et
- un module de mesure (4) agencé pour recevoir le rayonnement électromagnétique provenant de la lentille convergente (17),
dans lequel
[a] ladite lentille convergente (17) est disposée entre ledit émetteur optoélectronique et ladite feuille (18), et ledit dispositif comprend en outre :
- des moyens de division de faisceau (3), disposés entre ladite feuille (18) et ledit module de mesure (4) et appropriés pour diviser le rayonnement électromagnétique provenant de ladite lentille convergente (17) en un premier faisceau (20, 23) se propageant dans une première direction et un second faisceau (21, 24) se propageant dans une seconde direction, ledit premier faisceau étant dirigé vers ledit module de mesure (4),
- une seconde lentille convergente (25) dont l'axe optique coïncide avec ladite seconde direction, et
- un second module de mesure (5) apte à recevoir le rayonnement électromagnétique provenant de ladite seconde lentille convergente (25), ou dans lequel
[b] ladite feuille (18) est disposée entre ledit émetteur optoélectronique et ladite lentille convergente (17), et ledit dispositif comprend, en outre, une plaque de diffusion (31) disposée entre ladite feuille (18) et ladite lentille convergente (17).

2. Dispositif selon la revendication 1, **caractérisé en ce que** ledit réflecteur parabolique présente un diamètre d'ouverture allant de 20 à 80 mm, de préférence allant de 47 à 53 mm.

3. Dispositif selon la revendication 2, **caractérisé en ce que** le rapport du diamètre de l'ouverture à la distance entre l'ouverture et le point focal dudit réflecteur est compris entre 0,5 et 1,5.

4. Dispositif selon l'une quelconque des revendications 1 à 3, **caractérisé en ce que** lesdits moyens réfléchissants (13) présentent un angle d'ouverture supérieur à 20°, de préférence supérieur à 25°.

5. Dispositif selon l'une quelconque des revendications 1 à 4, **caractérisé en ce que** lesdits moyens réfléchissants (13) présentent un angle d'ouverture inférieur à 45°.

6. Dispositif selon l'une quelconque des revendications 1 à 5, **caractérisé en ce que** ladite lentille convergente (17) présente une longueur focale allant de 20 à 100 mm, de préférence allant de 37 à 43 mm.

7. Dispositif selon l'une quelconque des revendications 1 à 6, **caractérisé en ce que** lesdits trous présentent un diamètre allant de 0,25 à 2 mm, de préférence de 0,9 à 1,1 mm.

8. Dispositif selon l'une quelconque des revendications 1 à 7, **caractérisé en ce que** lesdits trous sont espacés les uns des autres d'une distance allant de 1 à 3 mm, de préférence de 1,8 à 2,2 mm.

9. Dispositif selon l'une quelconque des revendications 1 à 8, dans lequel, dans ladite variante [a], ladite seconde lentille convergente (25) présente une distance focale allant de 10 à 50 mm, de préférence allant de 18 à 22 mm.

10. Installation de fabrication d'un circuit intégré présentant un émetteur optoélectronique apte à émettre un faisceau de rayonnement électromagnétique et définissant un axe d'émission dudit faisceau, **caractérisée en ce qu'**elle comprend un dispositif de contrôle selon l'une quelconque des revendications 1 à 9.

11. Procédé de vérification d'un circuit intégré présentant un émetteur optoélectronique apte à émettre un faisceau de rayonnement électromagnétique et définissant un axe d'émission dudit faisceau, **caractérisé en ce qu'**une évaluation de certaines valeurs réelles indicatives de la quantité de rayonnement électromagnétique émis par ledit émetteur optoélectronique en fonction de la direction est effectuée, et est comparée à certaines plages de valeurs de référence prédéfinies, et **en ce que** ladite évaluation est effectuée à l'aide d'un dispositif selon l'une quelconque des revendications 1 à 9.

12. Procédé selon la revendication 11, **caractérisé en ce que** ladite évaluation comprend la comparaison de l'image réelle de chacun desdits trous obtenus dans le module de mesure ou le second module de mesure avec une image pré-établie où, de préférence, ladite comparaison inclut à la fois la comparaison de la position de l'image réelle de chacun desdits trous de la feuille par rapport à certaines positions pré-établies, et la comparaison de l'intensité du rayonnement réel reçu dans l'image de chacun des trous de ladite feuille par rapport à certaines intensités pré-établies.

13. Procédé de fabrication d'un circuit intégré comportant un émetteur optoélectronique apte à émettre un faisceau de rayonnement électromagnétique et définissant un axe d'émission dudit faisceau, **caractérisé en ce qu'**il comprend un procédé de contrôle selon l'une quelconque des revendications 11 ou 12.

14. Procédé selon la revendication 13, **caractérisé en ce qu'**il comprend :
- une étape de dépôt d'une couche de matériau polymère sur ledit émetteur optoélectronique,
- une étape de contrôle incluant ledit processus de contrôle, et
- si lesdites valeurs réelles sont en dehors desdites plages de valeurs pré-établies, une étape d'ajustement d'au moins un paramètre de fabrication.
